(19) **Europäisches Patentamt / European Patent Office / Office européen des brevets**

(11) **EP 4 734 175 A1**

(12) **EUROPEAN PATENT APPLICATION**
published in accordance with Art. 153(4) EPC

(43) Date of publication:
**29.04.2026 Bulletin 2026/18**

(21) Application number: **24856860.2**

(22) Date of filing: **23.08.2024**

(51) International Patent Classification (IPC):
$H01M\ 4/36^{(2006.01)}$     $H01M\ 4/525^{(2010.01)}$
$H01M\ 4/505^{(2010.01)}$     $H01M\ 4/131^{(2010.01)}$
$H01M\ 10/052^{(2010.01)}$     $H01M\ 10/0525^{(2010.01)}$
$C01G\ 53/00^{(2025.01)}$     $H01M\ 4/02^{(2006.01)}$

(52) Cooperative Patent Classification (CPC):
C01G 53/00; H01M 4/02; H01M 4/131; H01M 4/36;
H01M 4/505; H01M 4/525; H01M 10/052;
H01M 10/0525; Y02E 60/10

(86) International application number:
**PCT/KR2024/012655**

(87) International publication number:
**WO 2025/042249 (27.02.2025 Gazette 2025/09)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **24.08.2023 KR 20230111584
24.08.2023 KR 20230111585
24.08.2023 KR 20230111586**

(71) Applicant: **LG Energy Solution, Ltd.
Seoul 07335 (KR)**

(72) Inventors:
• **JO, Chi Ho
Daejeon 34122 (KR)**

• **PARK, Byung Chun
Daejeon 34122 (KR)**
• **KIM, Jong Woo
Daejeon 34122 (KR)**
• **YOO, Tae Gu
Daejeon 34122 (KR)**
• **JU, Ji Young
Daejeon 34122 (KR)**
• **YOO, Seung Su
Daejeon 34122 (KR)**

(74) Representative: **Hoffmann Eitle
Patent- und Rechtsanwälte PartmbB
Arabellastraße 30
81925 München (DE)**

(54) **POSITIVE ELECTRODE ACTIVE MATERIAL, AND POSITIVE ELECTRODE AND LITHIUM SECONDARY BATTERY COMPRISING SAME**

(57) The present invention relates to a positive electrode active material comprising: a single particle-form lithium nickel-based oxide having a Ni content of 50 mol% to 75 mol% and doped with a doping element $M^1$; and a coating layer formed on the single particle-form lithium nickel-based oxide and comprising a coating element $M^2$, wherein an oxidation number $AON_{c+d}$ defined by Equation (1) is 3.5 to 4.2, R defined by Equation (2) is 0.5 or less, and a ratio $(M^1/M^2)$ of the weight of the doping element $M^1$ to the weight of the coating element $M^2$ is 0.2 to 1.0, and a positive electrode and a lithium secondary battery comprising the same.

EP 4 734 175 A1

## Description

### TECHNICAL FIELD

The present invention relates to a positive electrode active material, and a positive electrode and a lithium secondary battery including the same, and more particularly, to a positive electrode active material capable of achieving stable operation at 4.35 V or higher and high energy density, and a positive electrode and a lithium secondary battery including the same.

### BACKGROUND ART

Lithium secondary batteries are generally composed of a positive electrode, a negative electrode, a separator, and an electrolyte, and the positive electrode and the negative electrode include active materials capable of the intercalation and deintercalation of lithium ions.

Lithium cobalt oxide ($LiCoO_2$), lithium nickel oxide ($LiNiO_2$), lithium manganese oxide ($LiMnO_2$, $LiMnO_4$ or the like), lithium iron phosphate compound ($LiFePO_4$) or the like have been used as positive electrode active materials for lithium secondary batteries. Among them, the lithium cobalt oxide has advantages of high operating voltages and excellent capacity characteristics, but the price of cobalt as a raw material is high and the supply is unstable, making it difficult to commercially apply to large-capacity batteries. The lithium nickel oxide has poor structural stability, making it difficult to achieve sufficient life characteristics. Meanwhile, the lithium manganese oxide has excellent stability but has the problem of poor capacity characteristics. Therefore, lithium composite transition metal oxides containing two or more transition metals have been developed to complement the problems of lithium transition metal oxides containing only Ni, Co, or Mn, and among them, lithium nickel cobalt manganese oxide containing Ni, Co, and Mn is widely used in the field of electric vehicle batteries.

The conventional lithium nickel cobalt manganese oxides were generally in the form of spherical secondary particles in which tens to hundreds of primary particles are agglomerated. However, in the case of the lithium nickel cobalt manganese oxides in the form of secondary particles in which lots of primary particles are agglomerated, there is a problem in that the primary particles are easily broken in a rolling process during the manufacture of a positive electrode, and cracks occur inside the particles during charge and discharge processes. If the positive electrode active material is broken or cracked, the contact area with an electrolyte increases, which increases gas generation and active material deterioration due to side reactions with the electrolyte, causing a problem in that the life characteristics are reduced.

Meanwhile, in the electric vehicle field, cells with high energy density are required to extend the single-drive distance, and accordingly, cells using high-nickel NCM positive electrode active materials with excellent capacity characteristics and a nickel content of 80 mol% or more are being developed as lithium secondary batteries for electric vehicles. However, if the nickel content in the positive electrode active material increases, initial capacity characteristics are improved, but if charge and discharge are repeated, a large amount of highly reactive $Ni^{+4}$ ions are generated, causing the structural collapse of the positive electrode active material, which increases the deterioration rate of the positive electrode active material, resulting in reduced life characteristics and reduced battery safety. The phenomenon becomes more severe as a driving voltage increases.

Therefore, the development of a lithium secondary battery with high energy density and excellent life characteristics is required.

### DISCLOSURE OF THE INVENTION

### TECHNICAL PROBLEM

The present invention is to solve the above-described problems and to provide a positive electrode active material that may be stably operated at high voltages to realize high energy density and have excellent life characteristics, and a positive electrode and a lithium secondary battery using the positive electrode active material.

### TECHNICAL SOLUTION

[1] The present invention provides a positive electrode active material comprising: a single particle-form lithium nickel-based oxide having a Ni content of 50 mol% to 75 mol% and doped with a doping element $M^1$; and a coating layer formed on the single particle-form lithium nickel-based oxide and comprising a coating element $M^2$, wherein an oxidation number $AON_{c+d}$ defined by Equation (1) below is 3.5 to 4.2, R defined by Equation (2) below is 0.5 or less,

and a ratio ($M^1/M^2$) of the weight of the doping element $M^1$ to the weight of the coating element $M^2$ is 0.2 to 1.0:

$AON_{c+d}$ = {$\Sigma$ (oxidation number of $M^1$ element $\times$ mole fraction of $M^1$ element) + $\Sigma$(oxidation number of $M^2$ element $\times$ mole fraction of $M^2$ element)}/(sum of mole fractions of $M^1$ element and M2 element)          Equation (1):

$$\text{Equation (2): } R = |AON_d - AON_c|$$

In Equation (2), $AON_d$ is an average oxidation number of the doping element $M^1$ defined by Equation (2-1) below, and $AON_c$ is an average oxidation number of the coating element $M^2$ defined by Equation (2-2) below.

$AON_d$ = $\Sigma$(oxidation number of element $M^1$ $\times$ mole fraction of element $M^1$)/(sum of mole fractions of element $M^1$)          Equation (2-1):

$AON_c$ = $\Sigma$ (oxidation number of element $M^2$ $\times$ mole fraction of element $M^2$)/(sum of mole fractions of element $M^2$).          Equation (2-2):

[2] The present invention provides the positive electrode active material according to [1], wherein the doping element $M^1$ is one or more selected from the group consisting of Ti, Mg, Al, Zr, Y, Ba, B, Ca, Sr, W, Ta, Nb, and Mo.

[3] The present invention provides the positive electrode active material according to [1] or [2], wherein the doping element $M^1$ is two or more selected from the group consisting of Ti, Mg, Al, Zr, Y, Ba, B, Ca, Sr, W, Ta, Nb, and Mo.

[4] The present invention provides the positive electrode active material according to at least one of [1] to [3], wherein the doping element $M^1$ comprises: one or more selected from the group consisting of Y, Sr, Ti and Nb; and Zr.

[5] The present invention provides the positive electrode active material according to at least one of [1] to [4], wherein the coating element $M^2$ is one or more selected from the group consisting of Ti, Mg, Al, Zr, Y, Ba, Ca, Sr, W, Ta, Nb, and Mo.

[6] The present invention provides the positive electrode active material according to at least one of [1] to [5], wherein the coating element $M^2$ is two or more selected from the group consisting of Ti, Mg, Al, Zr, Y, Ba, Ca, Sr, W, Ta, Nb, and Mo.

[7] The present invention provides the positive electrode active material according to at least one of [1] to [6], wherein the coating element M2 comprises Al and W.

[8] The present invention provides the positive electrode active material according to at least one of [1] to [7], wherein the average oxidation number $AON_d$ of the doping element, represented by Equation (2-1) is 2.5 to 5.5.

[9] The present invention provides the positive electrode active material according to at least one of [1] to [8], wherein the average oxidation number $AON_c$ of the coating element, represented by Equation (2-2) is 2.5 to 5.5.

[10] The present invention provides the positive electrode active material according to at least one of [1] to [9], wherein the R defined by Equation (2) is 0.01 to 0.30.

[11] The present invention provides the positive electrode active material according to at least one of [1] to [10], wherein the doping element $M^1$ is comprised in an amount of 500 ppm to 10,000 ppm on the basis of the total weight of the positive electrode active material.

[12] The present invention provides the positive electrode active material according to at least one of [1] to [11], wherein the coating element $M^2$ is comprised in an amount of 500 ppm to 10,000 ppm on the basis of the total weight of the positive electrode active material.

[13] The present invention provides the positive electrode active material according to at least one of [1] to [12], wherein the single particle-form lithium nickel-based oxide is represented by [Formula 1] below.

[Formula 1]          $Li_{1+x}[Ni_aCo_bMn_cM^1_d]O_2$

In [Formula 1], $M^1$ comprises one or more elements selected from the group consisting of Ti, Mg, Al, Zr, Y, Ba, Ca, Sr, W, Ta, Nb, and Mo, $-0.1 \leq x \leq 0.1$, $0.5 \leq a \leq 0.75$, $0 < b < 0.5$, $0 < c < 0.5$, and $0 < d \leq 0.2$.

[14] The present invention provides the positive electrode active material according to at least one of [1] to [13], wherein an average particle diameter of nodules of the single particle-form lithium nickel-based oxide is 0.8 $\mu$m to 4 $\mu$m.

[15] The present invention provides the positive electrode active material according to at least one of [1] to [14], wherein the positive electrode active material has $D_{50}$ of 3 $\mu$m to 8 $\mu$m.

[16] The present invention provides a positive electrode comprising the positive electrode active material according to at least one of [1] to [15].

[17] The present invention provides a lithium secondary battery comprising the positive electrode according to [16].

[18] The present invention provides the lithium secondary battery according to [17], wherein the lithium secondary battery has a charge cut-off voltage of 4.35 V or higher.

**ADVANTAGEOUS EFFECTS**

The positive electrode active material according to the present invention includes a single particle-form lithium nickel-based oxide having a small contact area with an electrolyte, thereby minimizing side reactions with the electrolyte and suppressing gas generation and reduction in lifespan due to the side reactions with the electrolyte.

In addition, since the positive electrode active material according to the present invention uses a lithium nickel-based oxide having a nickel content of 50 mol% to 75 mol%, the amount of highly reactive $Ni^{+4}$ ions may small, and thus the structural stability of the positive electrode active material may be improved, thereby preventing the positive electrode active material from rapidly being degraded even in cases of being operated at high voltages of 4.35 V or higher.

In addition, if average oxidation numbers and the contents of a doping element and a coating element are adjusted to specific ranges as in the positive electrode active material according to the present invention, the stability of the crystal structure and surface structure of the positive electrode active material may be improved, so that rapid degradation of the positive electrode active material may be suppressed if operated at high voltages of 4.35 V or higher. Therefore, if the positive electrode active material according to the present invention is applied, a secondary battery driven stably at high voltages of 4.35 V or higher, and having excellent capacity characteristics and life characteristics may be achieved.

**BEST MODE FOR CARRYING OUT THE INVENTION**

Words or terms used in the present description and claims shall not be interpreted as the meaning defined in commonly used dictionaries. The words or terms should be interpreted as having a meaning that is consistent with the technical idea of the invention, based on the principle that an inventor may properly define the meaning of the words or terms to best explain the invention.

In the present invention, a "single particle-form" means a particle composed of 30 or fewer nodules, and is a concept that includes a single particle composed of one nodule and a pseudo-single particle that is a composite of 2 to 30 nodules.

The "nodule" is a sub-particle unit that constitutes a single particle and a pseudo-single particle, and may be a single crystal without a crystalline grain boundary, or a polycrystal that has no apparent grain boundary when observed under a scanning electron microscope at a magnification of 5,000 to 20,000 times.

In the present invention, a "secondary particle" means a particle formed by agglomeration of a plurality of primary particles, for example, tens to hundreds of primary particles. Specifically, the secondary particle may be an agglomerate of 31 or more primary particles.

In the present invention, a "particle" is a concept including one or all of a single particle, a pseudo-single particle, a primary particle, a nodule, and a secondary particle.

In the present invention, the average particle diameter ($D_{mean}$) of nodules or primary particles means an arithmetic mean value calculated after measuring the particle diameters of nodules or primary particles observed in a scanning electron microscope or an electron back scatter diffraction (EBSD) image. For example, the particle diameter of the nodules or primary particles may be obtained by manufacturing an electrode using a positive electrode active material powder to be measured, cutting the electrode by ion milling (HITACHI IM-500, acceleration voltage of 6 kV) before rolling to obtain a cross-section, and then measuring using an FE-SEM (JEOL JSM7900F) device under the conditions of an acceleration voltage of 15 kV and a W.D. of 15 mm, with a scale of about $400\pm10$ primary particles.

In the present invention, an "average particle diameter $D_{50}$" means a particle size corresponding to 50% of the volume accumulation amount of the volume accumulation particle size distribution of a target powder for measurement, and may be measured using a laser diffraction method. For example, after a target powder is dispersed in a dispersion medium, it is introduced into a commercially available laser diffraction particle size measuring device (e.g., Microtrac MT 3000), ultrasonic waves of about 28 kHz are irradiated at an output of 60 W, a volume accumulation particle size distribution graph is obtained, and then, a particle size corresponding to 50% of the volume accumulation amount is obtained.

In the present invention, a "specific surface area" is measured by a BET method, and specifically, may be calculated from a nitrogen gas adsorption amount at liquid nitrogen temperature (77K) using BELSORP-mini II of BEL Japan Co.

Hereinafter, the present invention will be explained in more particularly.

**Positive Electrode Active Material**

The positive electrode active material according to the present invention includes a single particle-form lithium nickel-based oxide having a Ni content of 50 mol% to 75 mol% and doped with at least one doping element $M^1$; and a coating layer formed on the single particle-form lithium nickel-based oxide and including at least one coating element $M^2$.

In the case of a lithium nickel-based oxide in the form of secondary particles in which 31 to hundreds of primary particles are agglomerated, the contact area with an electrolyte is large, and fine particles are generated due to particle breakage during a positive electrode rolling process, which causes lots of side reactions with the electrolyte and the generation of gas during the side reaction process. In comparison, a single particle-form lithium nickel-based oxide has a small number of nodules constituting particles, and thus the interface within the particles is small, so the contact area with the electrolyte is small, and the particle strength is high. Accordingly, there is less particle breakage during rolling, so the side reaction with the electrolyte is less compared to secondary particles, and accordingly, the amount of gas generated is significantly less. Therefore, if the single particle-form lithium nickel-based oxide is applied as a positive electrode active material, excellent life characteristics may be obtained compared to secondary particles.

However, the single particle-form lithium nickel-based oxide has lower lithium mobility than the conventional secondary particle-form lithium nickel-based oxide particles because a lithium migration path within the particles is longer and the internodular interfaces that serve as the migration paths of lithium ions are smaller, so there is a problem that battery capacity is low and output characteristics are reduced. Therefore, to achieve a battery with high capacity, operation at high voltages is required.

If the charge cut-off voltage of a lithium secondary battery using the lithium nickel-based oxide is 4.3 V or lower, relatively stable performance may be achieved. However, if the charge cut-off voltage is 4.35 V or higher, side reactions with an electrolyte become severe, transition metal ions are eluted, and battery performance deteriorates rapidly. It is known that this performance deterioration becomes more severe if the temperature rises.

Conventionally, to solve such problems, a method for reducing contact with an electrolyte by coating an oxide of a metal such as Al, or boron on the surface of the lithium nickel-based oxide has been used. However, since the coating layer is not electrically active, if a coating layer is formed on the surface of the lithium nickel-based oxide, the resistance of the positive electrode active material increases, and resistance increase becomes more severe as the thickness of the coating layer increases. In particular, in the case of a single particle-form lithium nickel-based oxide, since the resistance is basically high, if a conventional coating layer is applied to the surface, the problem of output reduction due to resistance increase occurs more seriously.

The inventors of the present invention have conducted repeated studies to solve the problems, and as a result, they have found that by applying doping and coating to a single particle-form lithium nickel-based oxide having a nickel content of 50 mol% to 75 mol%, while satisfying the conditions of Equations (1) and (2) below and adjusting the content ratio of the doping element to the coating element to satisfy 0.2 to 1, the crystal structure and surface structure of the positive electrode active material are stably maintained even under a high voltage of 4.35 V or higher, thereby realizing excellent capacity characteristics and life characteristics, and have completed the present invention.

The positive electrode active material according to the present invention has an oxidation number $AON_{C+d}$ of 3.5 to 4.2, preferably 3.5 to 4.0, as defined by Equation (1) below.

$$AON_{c+d} = \{\Sigma \text{ (oxidation number of } M^1 \text{ element} \times \text{ mole fraction of } M^1 \text{ element)} + \Sigma(\text{oxidation number of } M^2 \text{ element} \times \text{ mole fraction of } M^2 \text{ element)}\}/(\text{sum of mole fractions of } M^1 \text{ element and } M^2 \text{ element)} \quad \text{Equation (1):}$$

In the case where multiple different elements are used as the $M^1$ element and/or the $M^2$ element, the average oxidation number is a value obtained by dividing the sum of the oxidation number of each element and the mole fraction of each element by the sum of the mole fractions of the doping element and the coating element. For example, if an a element and a b element are used as the $M^1$ element and a c element and a d element are used as the $M^2$ element, the average oxidation number of the doping element and the coating element is calculated as { (oxidation number of the a element $\times$ mole fraction of the a element) + (oxidation number of the b element $\times$ mole fraction of the b element) + (oxidation number of the c element $\times$ mole fraction of the c element) + (oxidation number of the d element $\times$ mole fraction of the d element)}/(mole fraction of the a element + mole fraction of the b element + mole fraction of the c element + mole fraction of the d element).

Meanwhile, in the case where the $M^1$ element and the $M^2$ element are elements having two or more oxidation numbers, the oxidation number is calculated as the oxidation number at which each element is in the most stable state. For example, the oxidation number of Al is calculated as 3, the oxidation number of Mg is calculated as 2, the oxidation number of Ti is calculated as 4, the oxidation number of Nb is calculated as 5, the oxidation number of Sr is calculated as 2, the oxidation number of Zr is calculated as 4, the oxidation number of W is calculated as 6, the oxidation number of Y is calculated as 3, and the oxidation number of B is calculated as 3.

Meanwhile, in Equation (1) above, the mole fraction of the $M^1$ element and the mole fraction of the $M^2$ element were calculated by dividing the weight ratio (unit: ppm) of each element in the positive electrode active material by the atomic weight of each element, i.e., the weight ratio of each element (ppm)/atomic weight of each element. In this case, the weight ratio of the $M^1$ and $M^2$ elements in the positive electrode active material may be measured using an inductively coupled plasma (ICP) method.

According to the research of the present inventors, if a positive electrode active material satisfying the $AON_{c+d}$ range of 3.5 to 4.2 is applied, it was found that high-voltage durability is significantly improved while minimizing the deterioration of the electrochemical properties of a secondary battery. In contrast, if the $AON_{c+d}$ of the positive electrode active material is less than 3.5 or exceeds 4.2, it was found that the positive electrode active material degradation is accelerated during high-voltage operation, resulting in a decrease in capacity and an increase in resistance.

The positive electrode active material according to the present invention has an R value defined by Equation (2) below of 0.50 or less, preferably 0.01 to 0.50, more preferably 0.01 to 0.30.

$$\text{Equation (2): } R = |AON_d - AON_c|$$

In Equation (2) above, $AON_d$ is the average oxidation number of the doping element $M^1$ defined by Equation (2-1) below, and $AON_c$ is the average oxidation number of the coating element $M^2$ defined by Equation (2-2) below.

$AON_d = \Sigma$(oxidation number of $M^1$ element $\times$ mole fraction of $M^1$ element)/ (sum of mole fractions of $M^1$ element)    Equation (2-1):

$AON_c = \Sigma$(oxidation number of $M^2$ element $\times$ mole fraction of $M^2$ element) / (sum of mole fractions of $M^2$ element)    Equation (2-2):

In Equations (2-1) and (2-2) above, the oxidation numbers and mole fractions of the $M^1$ and $M^2$ elements are the same as those described in Equation (1). That is, the oxidation number is the oxidation number at which each element is in the most stable state, and the mole fraction is the value of the weight ratio (unit: ppm) of each element in the positive electrode active material divided by the atomic weight of each element.

If R, represented by Equation (2), satisfies the above range, the crystal structure and surface structure of the positive electrode active material may be stably maintained, so that the degradation of the active material is suppressed during high-voltage operation, and the resistance characteristics and high-temperature life characteristics are improved. If the difference R between the average oxidation number $AON_d$ of the doping element $M^1$ and the average oxidation number $AON_c$ of the coating element $M^2$ exceeds 0.5, the resistance increases at the interface between the lithium nickel-based oxide and the coating layer due to the difference in the average oxidation numbers of the doping element and the coating element, and the life characteristics may be deteriorated due to the collapse of the crystal structure or surface structure during high-voltage operation.

Since the above $AON_{c+d}$, $AON_c$ and $AON_d$ are values that change depending on the types and contents of the doping element and coating element, $AON_{c+d}$, $AON_c$ and $AON_d$ may be adjusted to desired ranges by controlling the types and contents of the doping element and coating element during preparing the positive electrode active material.

The positive electrode active material according to the present invention has a ratio (M1/M2) of the weight of the doping element $M^1$ to the weight of the coating element $M^2$ of 0.2 to 1.0, preferably 0.3 to 1.0, more preferably 0.5 to 1.0. If $M^1/M^2$ exceeds 1.0, the capacity of the positive electrode active material decreases, and the surface stability of the positive electrode active material deteriorates when operated at high voltages, thereby increasing the amount of gas generated. If $M^1/M^2$ is less than 0.2, the resistance of the positive electrode active material increases, and the crystal structure collapses when operated at high voltages, which may rapidly cause the degradation of the active material.

Meanwhile, the doping element $M^1$ may include elements having oxidation numbers of 2 to 6. Specifically, the doping element $M^1$ may be one or more selected from the group consisting of Ti, Mg, Al, Zr, Y, Ba, Ca, Sr, W, Ta, Nb, and Mo, preferably two or more selected from the group consisting of Ti, Mg, Al, Zr, Y, Ba, Ca, Sr, W, Ta, Nb, and Mo, and more preferably two or more selected from the group consisting of Ti, Mg, Al, Zr, Sr, Nb, and Y. Even more preferably, the doping element $M^1$ may include one or more elements selected from Y, Sr, Ti, and Nb and Zr. Even more preferably, the doping element $M^1$ may include Zr and Y. If the above doping element $M^1$ is Zr or Y, the molar ratio of Y to Zr (Y/Zr) may be 0.1 or more and 5 or less, preferably 0.2 or more and 2 or less, and more preferably 0.3 or more and 0.8 or less.

The total content of the doping element $M^1$ based on the total weight of the positive electrode active material may be 500 ppm to 10,000 ppm, preferably 1000 ppm to 10,000 ppm, and more preferably 1500 ppm to 8000 ppm. If the content of the doping element $M^1$ satisfies the above range, the high-voltage durability may be improved while minimizing the capacity reduction of the positive electrode active material. If the content of the doping element is too large, the amount of the transition metal may decrease, which may have a negative effect on the capacity, and if the amount is too small, the effect of improving high-voltage durability is reduced.

Meanwhile, in the present invention, the doping element $M^1$ preferably has an average oxidation number $AON_d$ of doping elements defined by Equation (2-1) below of 2.5 or more, 3.0 or more, 3.3 or more, 3.4 or more, or 3.5 or more, and preferably 5.5 or less, 5.0 or less, 4.0 or less, or 3.9 or less. Specifically, the $AON_c$ may be 2.5 to 5.5, 3.0 to 5.0, 3.3 to 4.0, 3.4 to 3.9, or 3.5 to 3.9. Equation (2-1): $AON_d = \Sigma$(oxidation number of $M^1$ element $\times$ mole fraction of $M^1$ element)/(sum of mole fractions of $M^1$ element).

In Equation (2-1) above, the oxidation number and mole fraction of the $M^1$ element have the same meaning as described in Equation (1). If the average oxidation number of the doping element $M^1$ satisfies the above range, the crystal structure stability of the positive electrode active material is improved, and the effect of suppressing the deterioration of the active material during operation at high voltages may be obtained.

Meanwhile, the coating element $M^2$ may include elements having oxidation numbers of 2 to 6. Specifically, the coating element $M^2$ may include one or more selected from the group consisting of Ti, Mg, Al, Zr, Y, Ba, Ca, Sr, W, Ta, Nb, and Mo, preferably, two or more selected from the group consisting of Ti, Mg, Al, Zr, Y, Ba, Ca, Sr, W, Ta, Nb, and Mo, and more preferably, two or more elements selected from the group consisting of Ti, Mg, Al, Zr, Y, and W. Even more preferably, the coating element $M^2$ may include Al and W.

The total content of the coating element $M^2$ based on the total weight of the positive electrode active material may be 500 to 10,000 ppm, preferably 1,000 to 10,000 ppm, and more preferably 1,500 to 8,000 ppm. If the content of the coating element $M^2$ satisfies the above range, the effect of improving high-voltage durability may be obtained while minimizing the increase in resistance. If the content of the coating element is too large, the intercalation/deintercalation of lithium ions may be suppressed, which may increase the resistance, and if the content is too small, the effect of suppressing the dissolution of transition metals during high-voltage operation is reduced.

Meanwhile, in the present invention, the coating elements preferably have the average oxidation number $AON_c$ defined by Equation (2-2) below of 2.5 or more, 3.0 or more, 3.3 or more, 3.4 or more, or 3.5 or more, and preferably 5.5 or less, 5.0 or less, 4.0 or less, or 3.9 or less. Specifically, the $AON_c$ may be 2.5 to 5.5, 3.0 to 5.0, 3.3 to 4.0, or 3.4 to 3.9.

$$AON_c = \Sigma(\text{oxidation number of } M^2 \text{ element} \times \text{mole fraction of } M^2 \text{ element}) / (\text{sum of mole fractions of } M^2 \text{ element}) \qquad \text{Equation (2-2):}$$

In Equation (2-2) above, the oxidation number and mole fraction of the $M^2$ element have the same meaning as described in Equation (1). If the average oxidation number of the coating element $M^2$ satisfies the above range, the surface structure stability of the positive electrode active material may be improved, and the contact between electrolytes may be suppressed, so that the effect of suppressing the degradation of the active material during high voltage operation may be obtained.

The positive electrode active material according to the present invention includes a single particle-form lithium nickel-based oxide having a nickel content of 50 mol% to 75 mol%, preferably 50 mol% to 70 mol%, and doped with a doping element $M^1$. The doping element $M^1$ is the same as described above.

As described above, if a single particle-form lithium nickel-based oxide having a relatively low nickel content is used as a positive electrode active material, side reactions with an electrolyte may be suppressed under high voltage conditions, gas generation may be reduced, and excellent life characteristics may be achieved.

In the case of a single particle-form lithium nickel-based oxide having a relatively low nickel content, the structural stability at high voltage is higher than that of a lithium nickel-based oxide having a high nickel content or a secondary particle form, so that the deterioration of life characteristics may be minimized during high voltage operation. Specifically, as the nickel content in the lithium nickel-based oxide increases, highly reactive $Ni^{+4}$ ions increase, and as a result, the structural stability of the positive electrode active material decreases during charge and discharge, causing rapid deterioration of a positive electrode. This phenomenon is further aggravated during high voltage operation. Therefore, in the present invention, by applying a lithium nickel-based oxide having a low Ni content of 75 mol% or less, it is possible to suppress the reduction in lifespan due to the deterioration of the active material during high-voltage operation. However, since the capacity characteristics deteriorate if the Ni content is too small, it is preferable that the Ni content of the lithium nickel-based oxide be about 50 mol% to 75 mol%.

Specifically, the single particle-form lithium nickel-based oxide may be a lithium transition metal oxide containing nickel, manganese, and cobalt, and may be, for example, represented by [Formula 1] below.

[Formula 1]        $Li_{1+x}[Ni_aCo_bMn_cM^1_d]O_2$

In [Formula 1] above, $M^1$ may include one or two or more elements selected from the group consisting of Ti, Mg, Al, Zr, Y, Ba, Ca, Sr, W, Ta, Nb, and Mo. If the $M^1$ element is included, the structural stability of the lithium nickel-based oxide particles may be improved, so that excellent life characteristics may be achieved during operation at a high voltage. Preferably, the $M^1$ element may include one or more elements selected from the group consisting of Ti, Mg, Al, Zr, and Y, more preferably, two or more elements selected from the group consisting of Ti, Mg, Al, Zr, and Y.

The 1+x represents the molar ratio of lithium in the lithium nickel-based oxide, and may be $-0.1 \leq x \leq 0.1$, $0 \leq x \leq 0.1$, or

$0 \leq x \leq 0.07$. If $1+x$ satisfies the above range, a stable layered crystal structure may be formed.

The a represents the molar ratio of nickel among the total metals excluding lithium in the lithium nickel-based oxide, and may satisfy $0.5 \leq a \leq 0.75$, $0.55 \leq a \leq 0.75$, or $0.55 \leq a \leq 0.70$. If a satisfies the above range, stable operation at high voltage and high capacity may be achieved.

The b represents the molar ratio of cobalt among all metals excluding lithium in the lithium nickel-based oxide, and may satisfy $0 < b < 0.5$, $0.05 \leq b \leq 0.25$, or $0.1 \leq b \leq 0.30$.

The c represents the molar ratio of manganese among all metals excluding lithium in the lithium nickel-based oxide, and may satisfy $0 < c < 0.5$, $0.05 \leq c \leq 0.25$, or $0.1 \leq c \leq 0.30$.

The d represents the molar ratio of the $M^1$ element among all metals excluding lithium in the lithium nickel-based oxide, and may satisfy $0 \leq d \leq 0.2$, $0 \leq d \leq 0.1$, or $0 < d \leq 0.1$. If the molar ratio of the $M^1$ element satisfies the above range, the structural stability and capacity of the positive electrode active material may both be excellent.

Meanwhile, the single particle-form lithium nickel-based oxide contains 30 or fewer nodules, preferably 1 to 25 nodules, and more preferably 1 to 15 nodules. If the number of nodules constituting the lithium nickel-based oxide exceeds 30, particle breakage increases during electrode manufacturing, and internal cracks occur more due to volume expansion/contraction of the nodules during charge/discharge, which may deteriorate the effect of improving life characteristics at a high temperature and storage characteristics at a high temperature.

Meanwhile, the average particle diameter of the nodules may be 0.8 μm to 4.0 μm, preferably 0.8 μm to 3 μm, and more preferably 1.0 μm to 3.0 μm. If the average particle diameter of the nodules satisfies the above range, particle breakage may be minimized during electrode manufacturing, and resistance increase may be suppressed more effectively. In this case, the average particle diameter of the nodules means a value obtained by measuring the particle diameters of nodules observed in a SEM image obtained by analyzing the positive electrode active material powder with a scanning electron microscope, and then calculating the arithmetic average value of the measured values.

The positive electrode active material according to the present invention includes a coating layer formed on the single particle-form lithium nickel-based oxide and including a coating element $M^2$.

Preferably, the coating layer may include a Li-$M^2$-O solid solution. The $M^2$ is the same as described above. That is, the coating element $M^2$ may include one or more or two or more elements selected from the group consisting of Ti, Mg, Al, Zr, Y, Ba, B, Ca, Sr, W, Ta, Nb, and Mo, and may include two or more elements selected from the group consisting of Ti, Mg, Al, Zr, Y, and W. More preferably, the coating element $M^2$ may include Al and W. If the element is included, side reactions with an electrolyte at the surface of the positive electrode active material particles may be effectively suppressed.

If the coating element $M^2$ includes two elements (for convenience, referred to as $M^{2a}$ and $M^{2b}$), the $M^{2a}$ may have an average oxidation number of 2 to 3, and the $M^{2b}$ may have an average oxidation number of 4 to 6. The molar ratio ($M^{2a}/M^{2b}$) of $M^{2a}$ to $M^{2b}$ may be 1 to 10, preferably 2 to 6, and more preferably 2.5 to 4.

If the Li-$M^2$-O solid solution is Li-Al-W-O, the molar ratio (Al/W) of Al to W may be 1 to 10, preferably 2 to 6, and more preferably 2.5 to 4. If the above range is satisfied, the HF product due to the side reactions of a lithium salt in an electrolyte may be effectively suppressed, and the battery capacity characteristics and resistance characteristics may be improved.

Meanwhile, the positive electrode active material may have a $D_{50}$ of 3.0 μm to 8.0 μm, preferably 3.0 μm to 7.5 μm, more preferably, about 3.5 μm to 7.5 μm. If the $D_{50}$ of the lithium nickel-based oxide is too small, the processability during electrode manufacturing is poor, the electrolyte impregnation is poor, and the electrochemical properties may increase, and if the $D_{50}$ is too large, there are problems that the resistance increases and the output characteristics deteriorate.

In addition, the positive electrode active material may have a single particle ratio of the average particle diameter of the nodules to $D_{50}$ of 0.1 to 1, 0.2 to 0.8, 0.3 to 0.9, or 0.4 to 0.8. If the single particle ratio of the positive electrode active material satisfies the above range, the life characteristics and gas generation suppression effect are further improved at high temperatures and/or high voltages.

The positive electrode active material according to the present invention may have a BET specific surface area of 0.3 m²/g to 1.5 m²/g, preferably 0.4 m²/g to 1.3 m²/g, and more preferably 0.5 m²/g to 1.0 m²/g. If the BET specific surface area of the positive electrode active material satisfies the above range, capacity characteristics and life characteristics are more excellent. If the BET specific surface area is too small, the reaction area with the electrolyte may be insufficient, making it difficult to achieve sufficient capacity, and if the BET specific surface area is too large, the adhesive strength may be reduced during electrode manufacturing or side reactions with the electrolyte may be accelerated during electrode operation, making it difficult to secure life characteristics.

**Method for Preparing Positive Electrode Active Material**

Next, a method for preparing a positive electrode active material according to the present invention will be explained.

The method for preparing a positive electrode active material according to the present invention includes (1) a step of mixing and calcining a transition metal precursor, a lithium raw material, and a doping raw material including an $M^1$ element to prepare a single particle-form lithium nickel-based oxide, and (2) a step of mixing and heat-treating the single particle-form lithium nickel-based oxide and a coating raw material including an $M^2$ element to form a coating layer on the surface of the single particle-form lithium nickel-based oxide.

In this case, the doping raw material and the coating raw material are added in amounts that satisfy Equations (1) and (2), and the weight ratio ($M^1/M^2$) of the doping element $M^1$ to the coating element $M^2$ is 0.2 to 1.0.

First, a transition metal precursor having a nickel content of 50 mol% to 75 mol% among all metals excluding lithium, a lithium raw material, and a doping raw material including the doping element $M^1$ (wherein M1 is one or more selected from the group consisting of Ti, Mg, Al, Zr, Y, Ba, B, Ca, Zr, Sr, W, Ta, Nb, and Mo) are mixed and calcined to manufacture a single particle-form lithium nickel-based oxide including 30 or fewer nodules.

The transition metal precursor may be a precursor for a positive electrode active material, commonly used in the relevant technical field. For example, the transition metal precursor may be purchased and used as a precursor such as a commercially available nickel cobalt manganese hydroxide or nickel cobalt manganese oxide, or may be prepared and used according to a precursor preparation method known in the relevant technical field such as a coprecipitation method or spray pyrolysis.

As the lithium raw material, lithium-containing sulfate, nitrate, acetate, carbonate, oxalate, citrate, halide, hydroxide or oxyhydroxide may be used, and is not particularly limited as long as it may be dissolved in water. Specifically, the lithium raw material may be $Li_2CO_3$, $LiNO_3$, $LiNO_2$, LiOH, LiOH $-H_2O$, LiH, LiF, LiCl, LiBr, LiI, CH3COOLi, $Li_2O$, $Li_2SO_4$, $CH_3COOLi$, or $Li_3C_6H_3O_7$, and any one or a mixture of two or more thereof may be used.

As the doping raw material, an oxide, hydroxide, sulfide, oxyhydroxide, halide containing one or more elements selected from the group consisting of Ti, Mg, Al, Zr, Y, Ba, B, Ca, Zr, Sr, W, Ta, Nb, and Mo, or a mixture thereof may be used.

The mixing of the transition metal precursor, lithium raw material, and doping raw material may be performed by solid-phase mixing or liquid-phase mixing. If mixing each component through the solid-phase mixing, a calcining process may be performed without a separate drying process, and if mixing each component through the liquid-phase mixing, the mixed components are spray-dried and then a calcining process is performed.

Thereafter, the mixture may be calcined. The calcination may be performed in an air or oxygen atmosphere. The calcination is performed at a temperature and time suitable for forming the lithium nickel-based oxide in the form of single particles. The calcination temperature may vary depending on the Ni content, and may be performed, for example, t a temperature of 700°C to 1000°C, 750°C to 1000°C, or 850°C to 980°C, but is not limited thereto.

The calcination time may be, for example, 10 hours to 30 hours, 15 hours to 30 hours, or 20 hours to 28 hours, but is not limited thereto.

Next, the lithium nickel-based oxide is mixed with a coating raw material including the coating element $M^2$, and heat-treated to form a coating layer on the surface of the lithium composite transition metal oxide particle.

The coating layer may be formed using a method known in the art, and for example, a wet coating method, a dry coating method, a plasma coating method, or an atomic layer deposition (AL) may be used.

The wet coating method may be performed, for example, by adding a lithium nickel-based oxide and a coating raw material to an appropriate solvent such as ethanol, water, methanol, and acetone, and then mixing until the solvent disappears.

The dry coating method is a method of mixing the lithium nickel-based oxide and the coating raw material in a solid phase without a solvent, and for example, a grinder mixing method or a mechanofusion method may be used.

The coating raw material may be an oxide, hydroxide, oxyhydroxide, carbonate, sulfate, halide, sulfide, acetate, carboxylate including one or more elements selected from the group consisting of Ti, Mg, Al, Zr, Y, Ba, B, Ca, Zr, Sr, W, Ta, Nb, and Mo, or a combination thereof.

The heat treatment temperature may be appropriately adjusted depending on the type of the $M^2$ element, and for example, the heat treatment may be performed at a temperature of 200°C to 900°C, 250°C to 800°C, or 300°C to 700°C, but is not limited thereto. The heat treatment may be performed for 2 hours to 25 hours, 5 hours to 20 hours, or 8 hours to 18 hours, but is not limited thereto.

## Positive Electrode

Then, the positive electrode of the present invention will be explained.

The positive electrode according to the present invention includes the positive electrode active material according to the present invention described above, and may further include a positive electrode conductive material and a positive electrode binder, if necessary. Specifically, the positive electrode includes a positive electrode current collector, a positive electrode active material layer formed on at least one surface of the positive electrode current collector, and the positive electrode active material layer includes a positive electrode active material, a positive electrode conductive material, and a positive electrode binder. Meanwhile, since the positive electrode active material is the same as described above, detailed description thereof will be omitted.

The positive electrode current collector is not particularly limited as long as it is conductive and does not cause a chemical change in the battery, and for example, stainless steel, aluminum, nickel, titanium, fired carbon, or aluminum or stainless steel surface-treated with carbon, nickel, titanium, silver or the like may be used. In addition, the positive electrode current collector may typically have a thickness of 3 to 500 $\mu$m, and fine unevenness may be formed on the surface of the positive electrode current collector to increase the adhesive strength of the positive electrode active material. For example, various forms such as a film, a sheet, a foil, a net, a porous body, a foam, a non-woven fabric, or the like may be used.

Meanwhile, the positive electrode active material may be included in an amount of 93 wt% to 99 wt%, preferably 95 wt% to 98 wt%, and more preferably 95 wt% to 97 wt% based on the total weight of the positive electrode active material layer, that is, the total amount of the positive electrode active material, the positive electrode conductive material, and the positive electrode binder. If the content of the positive electrode active material satisfies the above range, high energy density may be realized.

Next, the positive electrode conductive material is used to provide the positive electrode with conductivity, and in the battery to be formed, if it does not cause a chemical change and has electronic conductivity, it may be used without any special restrictions. Specific examples include: graphite such as natural graphite and artificial graphite; carbon-based materials such as carbon black, acetylene black, Ketjen black, channel black, furnace black, lamp black, thermal black, carbon fiber, and carbon nanotube; metal powder or metal fiber of copper, nickel, aluminum, and silver; conductive whiskers of zinc oxide and potassium titanate; conductive metal oxides such as titanium oxide; or conductive polymers such as polyphenylene derivatives, and any one alone or a mixture of two or more thereof may be used.

The positive electrode conductive material may be included in an amount of 0.1 to 10 wt%, preferably 0.5 to 8 wt%, and more preferably 1 to 5 wt%, based on the total weight of the positive electrode active material layer.

Next, the positive electrode binder plays a role in improving the adhesion between positive electrode active material particles and the adhesive strength between the positive electrode active material and the positive electrode current collector. Specific examples include polyvinylidene fluoride (PVDF), a vinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinyl pyrrolidone, polytetrafluoroethylene, polyethylene, polypropylene, ethylene-propylene-diene monomer rubber (EPDM rubber), sulfonated-EPDM, styrene butadiene rubber (SBR), fluororubber, or various copolymers thereof, and one of them or a mixture of two or more thereof may be used.

The positive electrode binder may be included in an amount of 0.5 wt% to 5 wt%, preferably 1 wt% to 4 wt%, and more preferably 1 wt% to 3 wt%, based on the total weight of the positive electrode active material layer.

The positive electrode may be manufactured according to a common positive electrode manufacturing method. For example, the positive electrode may be manufactured by mixing a positive electrode active material, a positive electrode binder, and/or a positive electrode conductive material in a solvent to prepare a positive electrode slurry, applying the positive electrode slurry onto a positive electrode current collector, and then drying and rolling, or laminating a film obtained by casting the positive electrode slurry onto a separate support and then peeling off the film from the support, onto a positive electrode current collector.

Meanwhile, as a solvent for the positive electrode slurry, solvents generally used in the relevant technical field may be used, and for example, dimethyl sulfoxide (DMSO), isopropyl alcohol, N-methylpyrrolidone (NMP), acetone, water, or the like may be used alone or as a mixture of two or more thereof. Taking into account the coating thickness and preparation yield of the slurry, the amount of the solvent used is sufficient to dissolve or disperse the positive electrode active material, conductive material, and binder, and to have a viscosity that may exhibit excellent thickness uniformity when applied for subsequent positive electrode manufacturing.

## Negative Electrode

The lithium secondary battery according to the present invention includes a negative electrode including a negative electrode active material, a negative electrode conductive material, and a negative electrode binder. Specifically, the negative electrode includes a negative electrode current collector, a negative electrode active material layer formed on at least one surface of the negative electrode current collector, and the negative electrode active material layer includes a negative electrode active material, a negative electrode conductive material, and a negative electrode binder.

The negative electrode current collector is not particularly limited as long as it has high conductivity without causing a chemical change in the battery, and for example, copper, stainless steel, aluminum, nickel, titanium, fired carbon, copper or stainless steel surface-treated with carbon, nickel, titanium, silver or the like, an aluminum-cadmium alloy or the like may be used. In addition, the negative electrode current collector may typically have a thickness of 3 to 500 $\mu$m, and, like the positive electrode current collector, may form fine unevenness on the surface of the current collector to strengthen the bonding strength of the negative electrode active material. For example, various forms such as film, sheet, foil, net, porous body, foam, non-woven body, or the like may be used.

As the negative electrode active material, a compound capable of reversible intercalation and deintercalation of lithium may be used. Specific examples include carbonaceous materials such as artificial graphite, natural graphite, graphitized carbon fiber, and amorphous carbon; metallic compounds capable of alloying with lithium such as Si, Al, Sn, Pb, Zn, Bi, In, Mg, Ga, Cd, Si alloy, Sn alloy, or Al alloy; metal oxides capable of doping and dedoping lithium such as $SiO_\beta$ ($0<\beta<2$), $SnO_2$, vanadium oxide, and lithium vanadium oxide; or composites containing the metallic compound and carbonaceous material, such as a Si-C composite or a Sn-C composite, and any one or a mixture of two or more thereof may be used.

Meanwhile, both low-crystalline carbon and high-crystalline carbon may be used as the carbonaceous material. Soft carbon and hard carbon are representative examples of low-crystalline carbon, and the representative examples of high-crystalline carbon includes amorphous, plate-like, flaky, spherical or fiber-like natural graphite or artificial graphite, Kish graphite, pyrolytic carbon, mesophase pitch-based carbon fiber, mesocarbon microbeads, mesophase pitches, and high-temperature fired carbon such as petroleum or coal tar pitch derived cokes.

Preferably, the negative electrode active material may be composed of a carbon-based negative electrode active material, and in this case, the carbon-based negative electrode active material may include, for example, natural graphite, artificial graphite, graphitized carbon fiber, amorphous carbon, soft carbon, hard carbon, or a combination thereof. More preferably, the carbon-based negative electrode active material may include natural graphite and artificial graphite.

The carbon-based negative electrode active material may have an average particle diameter $D_{50}$ of 2 $\mu$m to 30 $\mu$m, preferably 5 $\mu$m to 30 $\mu$m.

The negative electrode active material may be included in an amount of 80 wt% to 98 wt%, preferably 90 wt% to 98 wt%, and more preferably 93 wt% to 98 wt% based on the total weight of the negative electrode active material layer. If the content of the negative electrode active material satisfies the above range, excellent energy density may be realized.

Next, the negative electrode conductive material is used to provide the negative electrode with conductivity, and in the battery to be formed, if it does not cause a chemical change and has electronic conductivity, it may be used without special restrictions. Specific examples include: graphite such as natural graphite or artificial graphite; carbon-based materials such as carbon black, acetylene black, Ketjen black, channel black, furnace black, lamp black, thermal black, carbon fiber, carbon nanotube or the like; metal powder or metal fiber of copper, nickel, aluminum, silver or the like; conductive whiskers of zinc oxide or potassium titanate; conductive metal oxides such as titanium oxide; or conductive polymers such as polyphenylene derivatives, or the like, and one of them alone or a mixture of two or more thereof may be used.

The negative electrode conductive material may be included in an amount of 0.1 to 10 wt%, preferably 0.5 to 8 wt%, more preferably 1 to 5 wt%, based on the total weight of the negative electrode active material layer.

The negative electrode binder serves to improve the adhesion between negative electrode active material particles and the adhesive strength between the negative electrode active material and the negative electrode current collector. Specific examples thereof include polyvinylidene fluoride (PVDF), a vinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinyl pyrrolidone, polytetrafluoroethylene, polyethylene, polypropylene, ethylene-propylene-diene monomer rubber (EPDM rubber), sulfonated-EPDM, styrene-butadiene rubber (SBR) , fluororubber, or various copolymers thereof, and one of them alone or a mixture of two or more thereof may be used.

The negative electrode binder may be included in an amount of 1 to 10 wt%, preferably 1 to 8 wt%, and more preferably 1 to 5 wt% based on the total weight of the positive electrode active material layer.

Meanwhile, in the lithium secondary battery according to the present invention, the negative electrode active material layer may have a single-layer structure or a multilayer structure of two or more layers. For example, the negative electrode may include a first negative electrode active material layer formed on at least one surface of the negative electrode current collector and including a first negative electrode active material; and a second negative electrode active material layer formed on the first negative electrode active material layer and including a second negative electrode active material. In this case, the first negative electrode active material and the second negative electrode active material may be made of a carbon-based negative electrode active material, for example, natural graphite, artificial graphite, or a combination thereof.

Meanwhile, if the negative electrode active material layer is a multilayer structure composed of two or more layers, each layer may have different types and/or contents of the negative electrode active material, binder, and/or conductive material.

For example, the weight ratio of natural graphite to the total weight of the negative electrode active material in the first negative electrode active material layer (lower layer) may be formed higher than the weight ratio of natural graphite to the total weight of the negative electrode active material in the second negative electrode active material layer (upper layer), and the weight ratio of artificial graphite to the total weight of the negative electrode active material in the second negative electrode active material layer may be formed higher than the weight ratio of artificial graphite to the total weight of the negative electrode active material in the first negative electrode active material layer.

Alternatively, the weight ratio of the conductive material to the total weight of the second negative electrode active material layer (upper layer) may be formed higher than the weight ratio of the conductive material to the total weight of the first negative electrode active material layer (upper layer) .

By forming the negative active material layer into a multilayer structure and varying the composition of each layer, the performance characteristics of the battery, such as rapid charging performance and output characteristics, may be further improved.

The negative electrode may be manufactured according to the conventional negative electrode manufacturing method. For example, the negative electrode may be manufactured by mixing a negative electrode active material, a negative electrode binder, and/or a negative electrode conductive material in a solvent to prepare a negative electrode slurry, applying the negative electrode slurry onto a negative electrode current collector, and then drying and rolling, or by casting the negative electrode slurry onto a separate support, and laminating a film obtained via peeling from the support onto a negative electrode current collector.

Meanwhile, as a solvent of the negative electrode slurry, solvents generally used in the relevant technical field may be used, and for example, dimethyl sulfoxide (DMSO), isopropyl alcohol, N-methylpyrrolidone (NMP), acetone, water, or the like may be used alone or in combination of two or more. Taking into account the coating thickness and preparation yield of the slurry, the amount of the solvent used is sufficient to dissolve or disperse the negative electrode active material, conductive material, and binder, and to have a viscosity that may exhibit excellent thickness uniformity during applying for subsequent positive electrode manufacturing.

**Electrolyte**

The electrolyte may include an organic solvent and a lithium salt.

The organic solvent may be used without any particular limitation as long as it may act as a medium through which ions involved in the electrochemical reaction of the battery may move. Specifically, the organic solvent may use an ester solvents such as methyl acetate, ethyl acetate, γ-butyrolactone, and ε-caprolactone; ether solvents such as dibutyl ether and tetrahydrofuran; ketone solvents such as cyclohexanone; aromatic hydrocarbon solvents such as benzene and fluorobenzene; carbonate solvents such as dimethyl carbonate (DMC), diethyl carbonate (DEC), methyl ethyl carbonate (MEC), ethyl methyl carbonate (EMC), ethylene carbonate (EC) and propylene carbonate (PC); alcohol-based solvents such as ethyl alcohol and isopropyl alcohol; nitriles such as R-CN (where R represents a C2 to C20 linear, branched, or cyclic hydrocarbon group, and may include a double-bonded aromatic ring or an ether bond); amides such as dimethylformamide; dioxolanes such as 1,3-dioxolane; and sulfolanes. Among them, the carbonate solvent is preferable, and a mixture of a cyclic carbonate (e.g., ethylene carbonate, propylene carbonate or the like) having high ionic conductivity and high dielectric constant that may improve the charge/discharge performance of the battery and a low-viscosity linear carbonate compound (e.g., ethyl methyl carbonate, dimethyl carbonate, diethyl carbonate or the like) is more preferable.

The lithium salt may be used without any particular limitation as long as it is a compound capable of providing lithium ions used in a lithium secondary battery. Specifically, the lithium salt may be $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, $LiCl$, $LiI$, or $LiB(C_2O_4)_2$. The concentration of the lithium salt is preferably used within a range of 0.1 to 3.0 M, preferably 0.1 to 2.0 M, and more preferably 0.5 to 1.5 M. If the concentration of the lithium salt is within the above range, the electrolyte may have appropriate conductivity and viscosity, so that excellent electrolyte performance may be exhibited, and lithium ions may move effectively.

In addition to the electrolyte components, the electrolyte may additionally include additives for the purpose of improving the life characteristics of the battery, suppressing battery capacity reduction, and improving the discharge capacity of the battery. For example, the additives include various additives used in the art, for example, fluoroethylene carbonate (FEC), vinylene carbonate (VC), vinylethylene carbonate (VEC), ethylene sulfate (ESa), lithium difluoropho-sphate ($LiPO_2F_2$), lithium bisoxalato borate (LiBOB), lithium tetrafluoroborate ($LiBF_4$), lithium difluorooxalato borate (LiDFOB), lithium difluorobisoxalatophosphate (LiDFBP), lithium tetrafluorooxalato phosphate (LiTFOP), lithium methyl sulfate (LiMS), lithium ethyl sulfate (LiES), propane sultone (PS), propene sultone (PRS), succinonitrile (SN), adiponitrile (AND), 1,3,6-hexanetricarbonitrile (HTCN), 1,4-dicyano-2-butene (DCB), fluorobenzene (FB), ethyldi(prop-2-yl-1-nyl) phosphate (EDP), 5-methyl-5propazyloxylcarbonyl-1,3-dioxane-2-one (MPOD) or the like, alone or in combination, but are not limited thereto. The additive may be included in an amount of 0.1 to 10 wt%, preferably 0.1 to 5 wt%, based on the total weight of the electrolyte.

**Separator**

The lithium secondary battery according to the present invention may further include a separator between the positive electrode and the negative electrode, if necessary. The separator separates the negative electrode and the positive electrode and provides a passage for lithium ions to move. Any separator commonly used in lithium secondary batteries may be used without particular limitation, and particularly, one having low resistance to ion movement of the electrolyte and excellent electrolyte moisture retention capacity is preferable. Specifically, a porous polymer film, for example, a porous polymer film made of a polyolefin-based polymer such as an ethylene homopolymer, a propylene homopolymer, an ethylene/butene copolymer, an ethylene/hexene copolymer, and an ethylene/methacrylate copolymer, or a laminated structure of two or more layers thereof may be used. In addition, the conventional porous nonwoven fabric, for example, a nonwoven fabric made of high-melting-point glass fibers, polyethylene terephthalate fibers, or the like may also be used. In addition, a coated separator containing ceramic components or polymer materials may be used to secure heat resistance or mechanical strength, and may optionally be used in a single layer or multilayer structure.

Meanwhile, it is preferable that the lithium secondary battery has a charge cut-off voltage of 4.35 V or higher, preferably 4.35 V to 5 V, and more preferably 4.35 V to 4.5 V. If the charge cut-off satisfies the above range, high energy density may be realized. The energy density of a lithium secondary battery is affected not only by the capacity of the active material used but also by the operating voltage range. In particular, if lithium nickel cobalt manganese oxide is used as a positive electrode active material, higher capacity may be realized as the operating voltage increases. However, there is a problem that if the operating voltage increases, side reactions with an electrolyte increase during charge and discharge, and the structural collapse of the positive electrode active material occurs rapidly, resulting in rapid deterioration of life characteristics. This problem is more prominent in high-nickel-based lithium nickel cobalt manganese-based oxide with a high nickel content. Therefore, conventionally, if lithium nickel cobalt manganese-based oxide was used as a positive electrode active material, it was generally used at a driving voltage of 2.0 V to 4.3 V. However, in the present invention, by applying a positive electrode active material in which a single particle-form lithium nickel-based oxide having a Ni content of 50 mol to 75 mol% is doped and coated to satisfy specific conditions, excellent life characteristics may be maintained even operated at a high voltage with a charge cut-off voltage of 4.35 V or higher.

The lithium secondary battery according to the present invention may be usefully applied to portable devices such as mobile phones, notebook computers, digital cameras, and electric vehicles such as hybrid electric vehicles (HEVs). The lithium secondary battery according to the present invention may be operated at high voltages to realize high energy density, and has excellent safety in the event of thermal runaway, so may be particularly usefully used in the electric vehicle field.

According to another embodiment of the present invention, a battery module including the lithium secondary battery according to the present invention as a unit cell, and a battery pack including the same are provided.

The battery module or battery pack may be used as a power source for one or more medium- or large-sized devices among power tools; electric cars including electric vehicles (EVs), hybrid electric vehicles, and plug-in hybrid electric vehicles (PHEVs); or power storage systems.

**BEST MODE FOR CARRYING OUT THE INVENTION**

Hereinafter, embodiments of the present invention will be described in detail so that those with ordinary knowledge in the technical field to which the present invention pertains may easily practice it. However, the present invention may be achieved in various different forms and is not limited to the embodiments described herein.

**Example 1**

Transition metal hydroxide $Ni_{0.6}Co_{0.1}Mn_{0.3}(OH)_2$, $Li_2CO_3$ as a lithium-containing raw material, $ZrO_2$ and $Y_2O_3$ as doping raw materials were mixed in amounts such that the contents of Zr and Y were 2800 ppm and 1400 ppm, respectively.

After the mixture was calcined at 940°C for 20 hours, the calcined product was mixed with ultrapure water in a weight ratio of 1:1, washed for 20 minutes, and filtered using a reduced pressure filter. After filtering, drying was performed at 130°C under vacuum conditions to produce a single particle-form lithium nickel-based oxide doped with Zr and Y inside.

The single particle-form lithium nickel-based oxide and $Al_2O_3$ and $WO_3$ as coating raw materials were mixed in amounts such that the contents of Al and W were 1400 ppm and 2900 ppm, respectively. After that, a positive electrode active material ($D_{50}$ = 3.8 $\mu$m) with a coating layer was prepared by heat-treating at 400°C for 15 hours.

The positive electrode active material prepared above: positive electrode conductive material: PVDF binder were mixed in a weight ratio of 95: 2: 3 in N-methylpyrrolidone to prepare a positive electrode slurry. In this case, carbon nanotubes were used as the positive electrode conductive material.

The positive electrode slurry was applied on an aluminum current collector sheet, dried, and then rolled to manufacture a positive electrode.

An electrode assembly was manufactured by interposing a separator between the positive electrode manufactured as described above and a lithium metal negative electrode, and the electrode assembly was inserted into a battery case, and an electrolyte was injected to manufacture a lithium secondary battery cell.

### Example 2

A lithium secondary battery was manufactured using the same method as Example 1, except that $Al_2O_3$ and $WO_3$ were mixed as coating raw materials in amounts such that the contents of Al and W were 1800 ppm and 3800 ppm, respectively, during preparing the positive electrode active material.

### Example 3

A lithium secondary battery was manufactured using the same method as Example 1, except that $ZrO_2$ and SrO were mixed instead of $ZrO_2$ and $Y_2O_3$, as coating raw materials in amounts such that the contents of Zr and Sr were 3500 ppm and 800 ppm, respectively, during preparing the positive electrode active material.

### Comparative Example 1

A lithium secondary battery was manufactured in the same method as Example 1, except that $ZrO_2$ and $Y_2O_3$ were mixed as doping raw materials in amounts such that the Zr and Y contents were 1200 ppm and 1400 ppm, respectively, and $Al_2O_3$ and $WO_3$ were mixed as coating raw materials in amounts such that the Al and W contents were 1500 ppm and 1000 ppm, respectively, during preparing the positive electrode active material.

### Comparative Example 2

A lithium secondary battery was manufactured in the same method as Example 1, except that $ZrO_2$ and $Y_2O_3$ were mixed as doping raw materials in amounts such that the Zr and Y contents were 1200 ppm and 500 ppm, respectively, and $Al_2O_3$ and $WO_3$ were mixed as coating raw materials in amounts such that the Al and W contents were 500 ppm and 4200 ppm, respectively, during preparing the positive electrode active material.

### Comparative Example 3

A lithium secondary battery was manufactured in the same method as Example 1, except that $ZrO_2$ and MgO were mixed instead of $ZrO_2$ and $Y_2O_3$ as doping raw materials in amounts such that the Zr and Mg contents were 1500 ppm and 1500 ppm, respectively, and $Al_2O_3$ and $H_3BO_3$ were used instead of $Al_2O_3$ and $WO_3$ were as coating raw materials in amounts such that the Al and B contents were 1500 ppm and 500 ppm, respectively, during preparing the positive electrode active material.

### Comparative Example 4

A lithium secondary battery was manufactured in the same method as Example 1, except that $ZrO_2$ and $Nb_2O_3$ were mixed instead of $ZrO_2$ and $Y_2O_3$ as doping raw materials in amounts such that the Zr and Nb contents were 1500 ppm and 1200 ppm, respectively, and $Al_2O_3$ and $WO_3$ were mixed as coating raw materials in amounts such that the Al and W contents were 500 ppm and 3000 ppm, respectively, during preparing the positive electrode active material.

### Comparative Example 5

A lithium secondary battery was manufactured in the same method as Example 1, except that $Ni_{0.86}Co_{0.08}Mn_{0.06}$ $(OH)_2$ was used instead of $Ni_{0.6}Co_{0.1}Mn_{0.3}$ $(OH)_2$ as the transition metal hydroxide during preparing lithium nickel-based oxide, and that the calcination was performed at 890°C for 20 hours to prepare the single particle-form lithium nickel-based oxide.

### Comparative Example 6

A lithium secondary battery was manufactured using the same method as Example 1, except that secondary particle-form lithium nickel-based oxide was prepared by performing calcination at 820°C for 20 hours during the preparation of the lithium nickel-based oxide.

Using Equations (1) to (3), the average oxidation number $AON_d$ of the doping element, the average oxidation number $AON_c$ of the coating element, and the average oxidation number $AON_{c+d}$ of the doping element and coating element were calculated for each of Examples 1 to 3 and Comparative Examples 1 to 6, and the calculation results are shown in Table 1 below.

[Table 1]

| | Ni/Co/Mn | Particle form | M¹ | M² | $AON_d$ | $AON_c$ | $AON_{c+}d$ | R | $W_{M1}/W_{M2}$ |
|---|---|---|---|---|---|---|---|---|---|
| Example 1 | 6/1/3 | Single particle | Zr 2800 ppm Y 1400 ppm | Al 1400 ppm W 2900 ppm | 3.66 | 3.70 | 3.68 | 0.04 | 0.98 |
| Example 2 | 6/1/3 | Single particle | Zr 2800 ppm Y 1400 ppm | Al 1800 ppm W 3800 ppm | 3.66 | 3.71 | 3.69 | 0.05 | 0.75 |
| Example 3 | 6/1/3 | Single particle | Zr 2500 ppm Sr 800 ppm | Al 1400 ppm W 2900 ppm | 3.62 | 3.70 | 3.66 | 0.08 | 0.77 |
| Example 4 | 6/1/3 | Single particle | Zr 2800 ppm Y 1400 ppm | Al 1400 ppm W 3000 ppm | 3.66 | 3.72 | 3.69 | 0.06 | 0.95 |
| Example 5 | 6/1/3 | Single particle | Zr 2800 ppm Y 1400 ppm | Al 1450 ppm W 3400 ppm | 3.66 | 3.77 | 3.73 | 0.11 | 0.87 |
| Comparative Example 1 | 6/1/3 | Single particle | Zr 1200 ppm Y 1400 ppm | Al 1500 ppm W 1000 ppm | 3.46 | 3.27 | 3.33 | 0.19 | 1.04 |
| Comparative Example 2 | 6/1/3 | Single particle | Zr 1200 ppm Y 500 ppm | Al 500 ppm W 4200 ppm | 3.70 | 4.66 | 4.36 | 0.96 | 0.36 |
| Comparative Example 3 | 6/1/3 | Single particle | Zr 1500 ppm Mg 1500 ppm | Al 1500 ppm B 500 ppm | 2.42 | 3.00 | 2.75 | 0.58 | 1.50 |
| Comparative Example 4 | 6/1/3 | Single particle | Zr 1500 ppm Nb 1200 ppm | Al 500 ppm W 3000 ppm | 4.44 | 4.40 | 4.42 | 0.04 | 0.77 |
| Comparative Example 5 | 86/8/6 | Single particle | Zr 2800 ppm Y 1400 ppm | Al 1400 ppm W 2900 ppm | 3.66 | 3.70 | 3.68 | 0.04 | 0.98 |
| Comparative Example 6 | 6/1/3 | Secondary particle | Zr 2800 ppm Y 1400 ppm | Al 1400 ppm W 2900 ppm | 3.66 | 3.70 | 3.68 | 0.04 | 0.98 |
| Comparative Example 7 | 6/1/3 | Single particle | Zr 400 ppm Y 200 ppm | Al 1400 ppm W 3000 ppm | 3.66 | 3.72 | 3.71 | 0.06 | 0.13 |
| Comparative Example 8 | 6/1/3 | Single particle | Zr 2800 ppm Y 1400 ppm | Al 1000 ppm W 1200 ppm | 3.66 | 3.45 | 3.56 | 0.21 | 1.9 |
| Comparative Example 9 | 86/8/6 | Single particle | Zr 2800 ppm Y 1400 ppm | Al 1400 ppm W 3000 ppm | 3.66 | 3.72 | 3.69 | 0.06 | 0.95 |
| Comparative Example 10 | 6/1/3 | Secondary particle | Zr 2800 ppm Y 1400 ppm | Al 1400 ppm W 3000 ppm | 3.66 | 3.72 | 3.69 | 0.06 | 0.95 |
| Comparative Example 11 | 6/1/3 | Single particle | Zr 400 ppm Y 200 ppm | Ti 1500 ppm Nb 1200 ppm | 3.66 | 4.29 | 4.21 | 0.63 | 0.22 |

(continued)

|  | Ni/Co/Mn | Particle form | $M^1$ | $M^2$ | $AON_d$ | $AON_c$ | $AON_{c+}$ d | R | $W_{M1}/W_{M2}$ |
|---|---|---|---|---|---|---|---|---|---|
| Comparative Example 12 | 6/1/3 | Secondary particle | Zr 2800 ppm Y 1400 ppm | Al 500 ppm W 5000 ppm | 3.66 | 4.78 | 4.22 | 1.12 | 0.76 |

**Experimental Example 1**

Each lithium secondary battery manufactured in Examples 1 to 5 and Comparative Examples 1 to 12 was charged to 4.35 V with 0.5 C at 45°C, and then discharged to 2.5 V with 1.0 C, which constituted one cycle, and charging and discharging were performed for 50 cycles. Then, the capacity retention and resistance increase were measured. The measurement results are shown in [Table 2] below.

[Table 2]

|  | Capacity retention (%) | Resistance increase (%) |
|---|---|---|
| Example 1 | 91.3 | 87.4 |
| Example 2 | 91.2 | 87.6 |
| Example 3 | 90.8 | 85.5 |
| Example 4 | 91.0 | 88.4 |
| Example 5 | 91.2 | 86.4 |
| Comparative Example 1 | 89.4 | 90.5 |
| Comparative Example 2 | 88.9 | 95.5 |
| Comparative Example 3 | 88.2 | 75.9 |
| Comparative Example 4 | 85.5 | 101.5 |
| Comparative Example 5 | 88.1 | 99.7 |
| Comparative Example 6 | 85.2 | 129.5 |
| Comparative Example 7 | 83.5 | 100.5 |
| Comparative Example 8 | 88.1 | 94.5 |
| Comparative Example 9 | 89.7 | 91.5 |
| Comparative Example 10 | 84.2 | 115.8 |
| Comparative Example 11 | 87.5 | 120.5 |
| Comparative Example 12 | 85.2 | 124.5 |

Through Table 2 above, it can be confirmed that the secondary batteries of Examples 1 to 5 have superior life characteristics compared to the secondary batteries of Comparative Examples 1 to 12.

**Claims**

1. A positive electrode active material comprising:

   a single particle-form lithium nickel-based oxide having a Ni content of 50 mol% to 75 mol% and doped with a doping element $M^1$; and
   a coating layer formed on the single particle-form lithium nickel-based oxide and comprising a coating element $M^2$,
   wherein an oxidation number $AON_{c+d}$ defined by the following Equation (1) is 3.5 to 4.2,
   R defined by the following Equation (2) is 0.5 or less, and
   a ratio ($M^1/M^2$) of the weight of the doping element $M^1$ to the weight of the coating element $M^2$ is 0.2 to 1.0:

$AON_{c+d} = \{\Sigma \text{ (oxidation number of } M^1 \text{ element} \times \text{mole fraction of } M^1 \text{ element}) + \Sigma(\text{oxidation number of } M^2 \text{ element} \times \text{mole fraction of } M^2 \text{ element})\}/(\text{sum of mole fractions of } M^1 \text{ element and } M^2 \text{ element})$    Equation (1):

$$\text{Equation (2): } R = |AON_d - AON_c|$$

in Equation (2), $AON_d$ is an average oxidation number of the doping element $M^1$ defined by the following Equation (2-1), and $AON_c$ is an average oxidation number of the coating element $M^2$ defined by the following Equation (2-2):

$AON_d = \Sigma(\text{oxidation number of element } M^1 \times \text{mole fraction of element } M^1)/(\text{sum of mole fractions of element } M^1)$    Equation (2-1):

$AON_c = \Sigma(\text{oxidation number of element } M^2 \times \text{mole fraction of element } M^2)/(\text{sum of mole fractions of element } M^2)$.    Equation (2-2):

2. The positive electrode active material according to claim 1, wherein the doping element $M^1$ is one or more selected from the group consisting of Ti, Mg, Al, Zr, Y, Ba, B, Ca, Sr, W, Ta, Nb, and Mo.

3. The positive electrode active material according to claim 1, wherein the doping element $M^1$ is two or more selected from the group consisting of Ti, Mg, Al, Zr, Y, Ba, B, Ca, Sr, W, Ta, Nb, and Mo.

4. The positive electrode active material according to claim 1, wherein the doping element $M^1$ comprises: one or more selected from the group consisting of Y, Sr, Ti and Nb; and Zr.

5. The positive electrode active material according to claim 1, wherein the coating element $M^2$ is one or more selected from the group consisting of Ti, Mg, Al, Zr, Y, Ba, Ca, Sr, W, Ta, Nb, and Mo.

6. The positive electrode active material according to claim 1, wherein the coating element $M^2$ is two or more selected from the group consisting of Ti, Mg, Al, Zr, Y, Ba, Ca, Sr, W, Ta, Nb, and Mo.

7. The positive electrode active material according to claim 1, wherein the coating element $M^2$ comprises Al and W.

8. The positive electrode active material according to claim 1, wherein the average oxidation number $AON_d$ of the doping element, represented by equation (2-1) is 2.5 to 5.5.

9. The positive electrode active material according to claim 1, wherein the average oxidation number $AON_c$ of the coating element, represented by Equation (2-2) is 2.5 to 5.5.

10. The positive electrode active material according to claim 1, wherein the R defined by Equation (2) is 0.01 to 0.30.

11. The positive electrode active material according to claim 1, wherein the doping element $M^1$ is comprised in an amount of 500 ppm to 10,000 ppm on the basis of the total weight of the positive electrode active material.

12. The positive electrode active material according to claim 1, wherein the coating element $M^2$ is comprised in an amount of 500 ppm to 10,000 ppm on the basis of the total weight of the positive electrode active material.

13. The positive electrode active material according to claim 1, wherein the single particle-form lithium nickel-based oxide is represented by the following [Formula 1]:

[Formula 1]     $Li_{1+x}[Ni_aCo_bMn_cM^1_d]O_2$

in [Formula 1], $M^1$ comprises one or more elements selected from the group consisting of Ti, Mg, Al, Zr, Y, Ba, Ca, Sr, W, Ta, Nb, and Mo, $-0.1 \leq x \leq 0.1$, $0.5 \leq a \leq 0.75$, $0 < b < 0.5$, $0 < c < 0.5$, and $0 < d \leq 0.2$.

14. The positive electrode active material according to claim 1, wherein an average particle diameter of nodules of the single particle-form lithium nickel-based oxide is 0.8 $\mu$m to 4 $\mu$m.

15. The positive electrode active material according to claim 1, wherein the positive electrode active material has $D_{50}$ of 3 $\mu$m to 8 $\mu$m.

16. A positive electrode comprising the positive electrode active material according to any one of claim 1 to claim 15.

17. A lithium secondary battery comprising the positive electrode according to claim 16.

18. The lithium secondary battery according to claim 17, wherein the lithium secondary battery has a charge cut-off voltage of 4.35 V or higher.

## INTERNATIONAL SEARCH REPORT

| International application No. |
| --- |
| **PCT/KR2024/012655** |

| A. | CLASSIFICATION OF SUBJECT MATTER |
| --- | --- |

**H01M 4/36**(2006.01)i; **H01M 4/525**(2010.01)i; **H01M 4/505**(2010.01)i; **H01M 4/131**(2010.01)i; **H01M 10/052**(2010.01)i; **H01M 10/0525**(2010.01)i; **C01G 53/00**(2006.01)i; **H01M 4/02**(2006.01)i

According to International Patent Classification (IPC) or to both national classification and IPC

| B. | FIELDS SEARCHED |
| --- | --- |

Minimum documentation searched (classification system followed by classification symbols)

H01M 4/36(2006.01); H01M 10/052(2010.01); H01M 10/0525(2010.01); H01M 4/131(2010.01); H01M 4/485(2010.01); H01M 4/525(2010.01); H01M 4/58(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 양극 활물질(cathode active material), 리튬 니켈계 산화물(lithium nickel oxide), 코팅층(coating layer), 도핑(doping)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | KR 10-2019-0059241 A (LG CHEM, LTD.) 30 May 2019 (2019-05-30)<br>See paragraphs [0075] and [0085]; and claims 2 and 15-16. | 1-18 |
| A | KR 10-2016-0045029 A (POSCO et al.) 26 April 2016 (2016-04-26)<br>See entire document. | 1-18 |
| A | KR 10-2015-0102405 A (LG CHEM, LTD.) 07 September 2015 (2015-09-07)<br>See entire document. | 1-18 |
| A | US 2019-0355988 A1 (NINGDE AMPEREX TECHNOLOGY LIMITED) 21 November 2019 (2019-11-21)<br>See entire document. | 1-18 |
| A | KR 10-2019-0051862 A (LG CHEM, LTD.) 15 May 2019 (2019-05-15)<br>See entire document. | 1-18 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **27 November 2024** | **27 November 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

| International application No. |
| --- |
| **PCT/KR2024/012655** |

| Patent document cited in search report | | | Publication date (day/month/year) | Patent family member(s) | | | Publication date (day/month/year) |
| --- | --- | --- | --- | --- | --- | --- | --- |
| KR | 10-2019-0059241 | A | 30 May 2019 | CN | 111164806 | A | 15 May 2020 |
| | | | | CN | 111164806 | B | 21 April 2023 |
| | | | | CN | 116154148 | A | 23 May 2023 |
| | | | | EP | 3680968 | A1 | 15 July 2020 |
| | | | | EP | 3680968 | A4 | 18 November 2020 |
| | | | | EP | 4250404 | A2 | 27 September 2023 |
| | | | | EP | 4250404 | A3 | 06 December 2023 |
| | | | | JP | 2020-520539 | A | 09 July 2020 |
| | | | | JP | 6929588 | B2 | 01 September 2021 |
| | | | | KR | 10-2023-0153983 | A | 07 November 2023 |
| | | | | KR | 10-2656223 | B1 | 11 April 2024 |
| | | | | KR | 10-2687546 | B1 | 24 July 2024 |
| | | | | US | 11594727 | B2 | 28 February 2023 |
| | | | | US | 11909045 | B2 | 20 February 2024 |
| | | | | US | 11967714 | B2 | 23 April 2024 |
| | | | | US | 2020-0295367 | A1 | 17 September 2020 |
| | | | | US | 2023-0163295 | A1 | 25 May 2023 |
| | | | | US | 2023-0352678 | A1 | 02 November 2023 |
| | | | | US | 2024-0234719 | A1 | 11 July 2024 |
| | | | | WO | 2019-103458 | A1 | 31 May 2019 |
| KR | 10-2016-0045029 | A | 26 April 2016 | KR | 10-1746187 | B1 | 12 June 2017 |
| KR | 10-2015-0102405 | A | 07 September 2015 | CN | 105940535 | A | 14 September 2016 |
| | | | | CN | 105940535 | B | 09 July 2019 |
| | | | | EP | 3113262 | A1 | 04 January 2017 |
| | | | | EP | 3113262 | A4 | 01 March 2017 |
| | | | | EP | 3113262 | B1 | 05 December 2018 |
| | | | | EP | 3439085 | A1 | 06 February 2019 |
| | | | | JP | 2017-504947 | A | 09 February 2017 |
| | | | | JP | 2018-195591 | A | 06 December 2018 |
| | | | | JP | 6515116 | B2 | 15 May 2019 |
| | | | | JP | 6749973 | B2 | 02 September 2020 |
| | | | | KR | 10-1644684 | B1 | 01 August 2016 |
| | | | | US | 10608251 | B2 | 31 March 2020 |
| | | | | US | 2016-0293951 | A1 | 06 October 2016 |
| | | | | WO | 2015-130106 | A1 | 03 September 2015 |
| US | 2019-0355988 | A1 | 21 November 2019 | CN | 108550833 | A | 18 September 2018 |
| | | | | CN | 108550833 | B | 29 June 2021 |
| | | | | CN | 113381000 | A | 10 September 2021 |
| | | | | CN | 113381000 | B | 24 March 2023 |
| | | | | EP | 3578516 | A2 | 11 December 2019 |
| | | | | EP | 3578516 | A3 | 26 February 2020 |
| KR | 10-2019-0051862 | A | 15 May 2019 | CN | 110574194 | A | 13 December 2019 |
| | | | | CN | 110574194 | B | 03 June 2022 |
| | | | | CN | 110582875 | A | 17 December 2019 |
| | | | | CN | 110582875 | B | 21 April 2023 |
| | | | | CN | 111213264 | A | 29 May 2020 |
| | | | | CN | 111213264 | B | 24 June 2022 |
| | | | | EP | 3609002 | A2 | 12 February 2020 |
| | | | | EP | 3609002 | A4 | 05 August 2020 |
| | | | | EP | 3609003 | A1 | 12 February 2020 |

Form PCT/ISA/210 (patent family annex) (July 2022)

### INTERNATIONAL SEARCH REPORT
Information on patent family members

International application No.

**PCT/KR2024/012655**

| Patent document cited in search report | Publication date (day/month/year) | Patent family member(s) | | Publication date (day/month/year) |
|---|---|---|---|---|
| | | EP | 3609003 A4 | 22 April 2020 |
| | | EP | 3609003 B1 | 12 June 2024 |
| | | EP | 3683873 A2 | 22 July 2020 |
| | | EP | 3683873 A4 | 05 August 2020 |
| | | EP | 3683873 B1 | 12 April 2023 |
| | | JP | 2020-525990 A | 27 August 2020 |
| | | JP | 2020-532842 A | 12 November 2020 |
| | | JP | 2020-537324 A | 17 December 2020 |
| | | JP | 7045549 B2 | 01 April 2022 |
| | | JP | 7045586 B2 | 01 April 2022 |
| | | JP | 7047217 B2 | 05 April 2022 |
| | | KR | 10-2019-0051863 A | 15 May 2019 |
| | | KR | 10-2019-0051864 A | 15 May 2019 |
| | | KR | 10-2264736 B1 | 15 June 2021 |
| | | KR | 10-2460353 B1 | 31 October 2022 |
| | | KR | 10-2656222 B1 | 11 April 2024 |
| | | US | 11258056 B2 | 22 February 2022 |
| | | US | 11532807 B2 | 20 December 2022 |
| | | US | 2020-0083524 A1 | 12 March 2020 |
| | | US | 2020-0119341 A1 | 16 April 2020 |
| | | US | 2020-0343536 A1 | 29 October 2020 |
| | | WO | 2019-088805 A2 | 09 May 2019 |
| | | WO | 2019-088806 A1 | 09 May 2019 |
| | | WO | 2019-088807 A2 | 09 May 2019 |

Form PCT/ISA/210 (patent family annex) (July 2022)